# EUROPÄISCHE PATENTANMELDUNG

(11) **EP 2 762 861 A2**
(43) Veröffentlichungstag der Anmeldung: **06.08.2014**
(21) Anmeldenummer: 14152091.6
(22) Anmeldetag: 22.01.2014
(51) Int. Cl.: G01N 21/90

(54) **Fremdkörperinspektion in gefüllten Behältern**

(30) Priorität: 05.02.2013 DE 102013201798
(71) Anmelder: Krones AG, 93073 Neutraubling (DE)
(72) Erfinder: Fiegler, Rudolf, 93073 Neutraubling (DE)
(74) Vertreter: Grünecker, Kinkeldey, Stockmair & Schwanhäusser

(57) **Zusammenfassung**

In einer Vorrichtung zur Inspektion gefüllter Behälter (1) auf etwaige Fremdkörper (2) wird der gefüllte Behälter durch Vibration oder Rotation mechanisch angeregt, um die ggf. vorhanden Fremdkörper in Bewegung zu versetzen. Die durch Stöße der Fremdkörper mit der Behälterinnenwand entstehenden akustischen Signale werden erfasst und ausgewertet. Erfindungsgemäß wird dabei die Signaldetektion von der mechanischen Anregung und die mechanische Anregung vom Transport der Behälter getrennt, indem der Sensor (3) zur Signaldetektion erst nach Abschluss der mechanischen Anregung an den Behälter angelegt wird, bzw. die mechanische Anregung durch ein Anregungselement (6, 7) erfolgt, das unabhängig von den für den Transport verwendeten Halteelementen (5) mit dem Behälter (1) in Kontakt gebracht wird.

## Beschreibung

Die Erfindung betrifft eine Vorrichtung und ein Verfahren zur Inspektion gefüllter Behälter auf ggf. darin enthaltene Fremdkörper.

Bei der Getränkeabfüllung oder der Abfüllung von sonstigen Flüssigkeiten in Behältern, wie beispielsweise Glas- oder Kunststoffbehälter, kann es nötig sein, die gefüllten und verschlossenen Behälter auf Fremdkörper zu inspizieren. Bei dem Abfüllvorgang können beispielsweise einzelne Maschinenteile wie Muttern, Schrauben oder Ähnliches in die Behälter geraten. Derartig große Fremdkörper können relativ leicht erkannt werden.

Schwierig ist die Erkennung von feinen Partikeln wie transparente Glassplitter. Da Behälter am Boden oft Abwetzungen oder Kratzer aufweisen, sind Glassplitter dem gegenüber oft nicht eindeutig zu identifizieren.

### STAND DER TECHNIK

Zur Erkennung von derartigen Fremdkörpern ist aus der WO 2004/053471 eine Vorrichtung zum Inspizieren von gefüllten und geschlossenen Gefäßen bekannt. Hier ist offenbart, die Behälter in Rotation zu versetzen, sodass sich auch das Innere des Behälters inklusive der Glassplitter in Rotation versetzt. Nach Anhalten der Behälter dreht sich die Flüssigkeit mit den Glassplittern weiter, sodass diese durch entsprechende Kameraaufnahmen leicht erkannt werden können.

Um das Innere eines Behälters durch Rotation des Behälters in Bewegung zu setzen, ist vergleichsweise viel Zeit nötig, sodass sich hier bei hohen Solldurchsatzraten ein entsprechend großer Maschinenaufwand ergibt.

Aus der DE 10 2004 051961 A1 ist eine Vorrichtung zur Inspektion auf Fremdkörper in einem gefüllten Behälter bekannt. Bei der Vorrichtung kann der gefüllte und verschlossene Behälter in einer bewegbaren Haltevorrichtung gehalten und bevorzugt zusammen mit einer mit der Haltevorrichtung mitführbaren Inspektionskamera kontinuierlich auf einer Umlaufbahn bewegt werden. Durch eine Vibrationseinrichtung zum Erzeugen von Vibrationen im Behälter werden Fremdkörper, wie etwa feine Glassplitter, am Boden des Behälters in Bewegung versetzt und können so mit der Inspektionskamera erfasst werden.

Nachteilig ist dabei der mit der Bildverarbeitung verbundene technische Aufwand sowie die Beschränkung auf transparente Behälter und Flüssigkeiten.

Aus der DE 10 2010 053 771 A1 ist ebenfalls eine Vorrichtung zur Inspektion auf Fremdkörper in einem gefüllten Behälter bekannt. Bei dieser Vorrichtung werden die Behälter über die Haltevorrichtung mechanisch angeregt, so dass sich die in ihnen enthaltene Flüssigkeit mitsamt der etwaigen Fremdkörper gegenüber der Behälterwand bewegt. Die Signale, die durch Stöße der Fremdkörper mit der Gehäusewand entstehen können, werden durch einen in der Haltevorrichtung integrierten Piezo-Sensor erfasst. Die von dem Piezo-Sensor gelieferten Signale werden mittels eines Schleifrings oder per Funk an eine Auswertungseinheit übertragen.

Durch die Integration der Piezo-Sensoren in die Haltevorrichtung, die zugleich für die mechanische Anregung eingerichtet sein muss, entsteht jedoch ein erheblicher konstruktiver Aufwand, der einer kostengünstigen Lösung entgegen steht.

### ZUSAMMENFASSUNG DER ERFINDUNG

Aufgabe der vorliegenden Erfindung ist es daher, die Vorrichtung und das Verfahren zur Inspektion auf Fremdkörper in einem Behälter zu verbessern.

Diese Aufgabe wird gelöst durch die Merkmale der unabhängigen Ansprüche. Bevorzugte Weiterbildungen sind Gegenstand der abhängigen Ansprüche.

Es ist der besondere Ansatz der vorliegenden Erfindung, die mechanische Anregung der in den Behältern ggf. enthaltenen Fremdkörper, die akustische Signaldetektion und den Transport der Behälter von einander zu entkoppeln.

Gemäß einem ersten Aspekt der vorliegenden Erfindung wird eine Vorrichtung zur Inspektion gefüllter Behälter auf Fremdkörper während der zu inspizierende Behälter mittels eines Halteelementes in einer Transportvorrichtung fixiert ist und entlang einer vorgegebenen Trajektorie transportiert wird, zur Verfügung gestellt. Die Vorrichtung umfasst eine Anregungsvorrichtung, die dazu eingerichtet ist, den Behälter mechanisch anzuregen, so dass etwaige Fremdkörper in Bewegung versetzt werden, einen Sensor, und eine Anlegevorrichtung, die dazu eingerichtet ist, den Sensor an den Behälter anzulegen, wobei der Sensor dazu eingerichtet ist, im angelegten Zustand akustische Signale der durch die mechanische Anregung in Bewegung versetzten Fremdkörper aufzunehmen. Die Vorrichtung zeichnet sich dadurch aus, dass die Anlegevorrichtung des Weiteren dazu eingerichtet ist, den Sensor erst nach Abschluss der mechanischen Anregung an den Behälter anzulegen. Dadurch werden die Anregung und die Signaldetektion entkoppelt, so dass die Sensoren bei der mechanischen Anregung der Behälter nicht mitbewegt werden müssen.

Vorzugsweise ist die Anlegevorrichtung dabei in Transportrichtung hinter der Anregungsvorrichtung angeordnet, so dass auch eine räumliche Entzerrung für die Anregung und die Signaldetektion erzielt wird. Die Transportvorrichtung kann insbesondere ein Bearbeitungskarussell und einen nachfolgenden Transferstern umfassen, wobei die Anregungsvorrichtung im Bearbeitungskarussell oder in einem Überschub zwischen dem Bearbeitungskarussell und dem Transferstern, und die Anlegevorrichtung im Transferstern angeordnet sein kann.

Gemäß einem zweiten Aspekt der vorliegenden Erfindung wird eine Vorrichtung zur Inspektion gefüllter Behälter auf Fremdkörper während der zu inspizierende Behälter mittels eines Halteelementes in einer Transportvorrichtung fixiert ist und entlang einer vorgegebenen Trajektorie transportiert wird, zur Verfügung gestellt. Die Vorrichtung umfasst eine Anregungsvorrichtung, die dazu eingerichtet ist, den Behälter mechanisch anzuregen, so dass etwaige Fremdkörper in Bewegung versetzt werden, einen Sensor, und eine Anlegevorrichtung, die dazu eingerichtet ist, den Sensor an den Behälter anzulegen, wobei der Sensor dazu eingerichtet ist, im angelegten Zustand akustische Signale der durch die mechanische Anregung in Bewegung versetzten Fremdkörper aufzunehmen. Die Vorrichtung zeichnet sich dadurch aus, dass die Anregungsvorrichtung unabhängig von dem Halteelement mit dem Behälter in Kontakt bringbar ist. Dadurch werden die Anregung und der Transport der Behälter entkoppelt, wodurch der konstruktive Aufwand erheblich reduziert wird.

Die mechanische Anregung der ggf. vorhandenen Fremdkörper kann in jeder geeigneten Weise erfolgen. Die Anregungsvorrichtung kann insbesondere dazu eingerichtet sein, den Behälter in Rotation und/oder in Vibration zu versetzen, so dass die ggf. vorhandenen Fremdkörper in eine kreiselnde und/oder hüpfende Bewegung versetzt werden.

In einer bevorzugten Ausführungsform umfasst die Anregungsvorrichtung eine Vibrationseinrichtung, die über ein elastisches Element, vorzugsweise eine Feder, gegen den Behälter verspannt werden kann. Eine derartige Anregungsvorrichtung kann ohne größeren konstruktiven Aufwand auch in bestehenden Transportvorrichtungen nachgerüstet werden. Die Anregungsvorrichtung kann aber auch einen Motor umfassen, der den Behälter, vorzugsweise um seine Längsachse, in Rotation versetzen kann.

Der Sensor kann an jeder geeigneten Stelle mit dem Behälter in Kontakt gebracht werden. Bevorzugt ist allerdings eine Anlegevorrichtung, die dazu eingerichtet ist, den Sensor mit einer Außenwand, vorzugsweise einer Seitenwand, des Behälters in Kontakt zu bringen, da die äußere Seitenwand der Behälter (bei Flaschen insbesondere im Bereich des Flaschenbauchs) in den üblichen Transportvorrichtungen leicht zugänglich ist. Der Sensor bewegt sich dabei im angelegten Zustand vorteilhafter Weise längs oder zumindest parallel zu der durch die Transportvorrichtung vorgegebenen Trajektorie - und nicht etwa auf einer der Trajektorie überlagerten Kreisbewegung, wie dies für die Seitenwand bei rotierenden Behältern der Fall wäre.

Zur Signalerfassung kann jeder Sensor verwendet werden, der dazu eingerichtet ist, akustische Signale von an eine Innenwand des Behälters stoßenden Fremdkörpern aufzunehmen, insbesondere Sensoren mit piezoelektrischen Elementen. Der Sensor kann ggf. in einer Klammer eines Klammersterns der Transportvorrichtung integriert sein, so dass zusätzliche Mittel zur Sicherstellung eines mechanischen Kontakts zwischen dem Sensor und dem Behälter entfallen können.

Für die Steuerung der Anlegebewegung des Sensors an den Behälter kann die Anlegevorrichtung jedes geeignete Mittel, wie z.B. eine Steuerkurve, Hubkurve, einen Motor, einen Linearmotor, oder einen Servomotor umfassen.

Vorteilhafter Weise umfasst die Vorrichtung des Weiteren eine Auswertungseinheit, die dazu eingerichtet ist, das von dem Sensor aufgenommene akustische Signal im Zeit- und/oder im Frequenzraum zu analysieren und auf Basis der Analyse über die Gegenwart oder die Abwesenheit eines Fremdkörpers in dem Behälter zu entscheiden. Ein Ausgabesignal der Auswertungseinheit kann dann von der Prozessleittechnik verwendet werden, um die betroffenen Behälter auszuleiten.

In Entsprechung mit dem ersten Aspekt der vorliegenden Erfindung wird ein Verfahren zur Inspektion gefüllter Behälter auf Fremdkörper, während der zu inspizierende Behälter mittels eines Halteelementes in einer Transportvorrichtung fixiert ist und entlang einer vorgegebenen Trajektorie transportiert wird, zur Verfügung gestellt. Das Verfahren umfasst die Schritte mechanisches Anregen eines Behälters, so dass etwaige Fremdkörper in Bewegung versetzt werden, Anlegen eines Sensors an den Behälter, und Aufnehmen von akustischen Signalen der durch die mechanische Anregung in Bewegung versetzten Fremdkörper mittels des angelegten Sensors. Das Verfahren ist dadurch gekennzeichnet, dass der Sensor erst nach Abschluss der mechanischen Anregung an den Behälter angelegt wird.

In Entsprechung mit dem zweiten Aspekt der vorliegenden Erfindung wird ein Verfahren zur Inspektion gefüllter Behälter auf Fremdkörper, während der zu inspizierende Behälter mittels eines Halteelementes in einer Transportvorrichtung fixiert ist und entlang einer vorgegebenen Trajektorie transportiert wird, zur Verfügung gestellt. Das Verfahren umfasst die Schritte mechanisches Anregen eines Behälters mittels einer Anregungsvorrichtung, so dass etwaige Fremdkörper in Bewegung versetzt werden, Anlegen eines Sensors an den Behälter, und Aufnehmen von akustischen Signalen der durch die mechanische Anregung in Bewegung versetzten Fremdkörper mittels des angelegten Sensors. Das Verfahren ist dadurch gekennzeichnet, dass die Anregungsvorrichtung unabhängig von dem Halteelement mit dem Behälter in Kontakt gebracht wird.

Die Erfindung wird im folgenden unter Bezugnahme auf die beigefügten Abbildungen beschrieben, in denen
- Fig. 1: eine schematische Ansicht der Vorrichtung gemäß einer ersten Ausführungsform zeigt,
- Fig. 2: eine schematische Ansicht der Vorrichtung gemäß einer zweiten Ausführungsform zeigt, und
- Fig. 3: schematisch eine Draufsicht auf eine Transportvorrichtung mit einer erfindungsgemäßen Inspektionsvorrichtung zeigt.

In einer Vorrichtung zur Inspektion gefüllter Behälter auf etwaige Fremdkörper wird der gefüllte Behälter durch Vibration oder Rotation mechanisch angeregt, um die ggf. vorhanden Fremdkörper in Bewegung zu versetzen. Die durch Stöße der Fremdkörper mit der Behälterinnenwand entstehenden akustischen Signale werden erfasst und ausgewertet. Erfindungsgemäß wird dabei die Signaldetektion von der mechanischen Anregung und die mechanische Anregung vom Transport der Behälter getrennt, indem der Sensor zur Signaldetektion erst nach Abschluss der mechanischen Anregung an den Behälter angelegt wird, bzw. die mechanische Anregung durch ein Anregungselement erfolgt, das unabhängig von den für den Transport verwendeten Halteelementen mit dem Behälter in Kontakt gebracht wird.

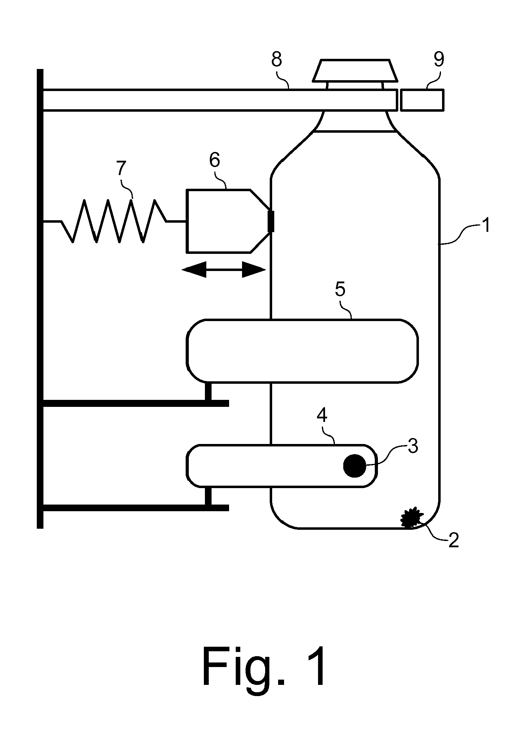

Figur 1 zeigt eine schematische Ansicht der Vorrichtung gemäß einer ersten Ausführungsform der vorliegenden Erfindung. Der Behälter 1, wie beispielsweise eine Getränkeflasche aus Glas, Kunststoff oder dgl., wird mit Klammern 5 gehalten, wie sie z.B. aus der EP 0 726 216 B1 oder der EP 0 795 500 B1 bekannt sind. Die Klammern selbst können an einem nicht näher dargestellten Karussell befestigt sein. An dem Karussell kann auch eine Schablone 8 befestigt sein, die Vertiefungen aufweist, in denen der Halsbereich der Behälter 1 aufgenommen und zentriert werden. Die Vertiefungen können an der radial äußeren Seite von einem umlaufenden Keilriemen 9 verschlossen werden, so dass der Hals der Behälter in der Schablone 8 fixiert ist. Durch die Schablone 8, den Keilriemen 9 und die Klammern 5 werden die Behälter 1 relativ zu dem Karussell an einer vorbestimmten Position gehalten. Die Behälter 1 können dabei durch das Karussell auf einer vorbestimmten horizontalen Kreisbahn kontinuierlich umlaufend bewegt werden.

Unabhängig von den Haltevorrichtungen 5 ist eine Vibrationseinrichtung 6 angeordnet. Diese kann einen Schwingungserzeuger und einen Stössel umfassen. Beides zusammen kann mit einer Feder 7 elastisch gegen den Behälter 1 vorgespannt werden, sodass die Vibrationseinrichtung 6 mit einem gewissen Druck auf der Behälterwand anliegt. Die Vibrationseinrichtung 6 kann oberhalb und/oder unterhalb der Klammern 5 angeordnet sein.

Die Vibrationseinrichtung 6 kann dazu eingerichtet sein, in Pfeilrichtung radial vor und zurück bewegt werden. Dadurch ist es möglich, den Behälter 1 zunächst mit der Haltevorrichtung 5, der Schablone 8 und dem Keilriemen 9 zu fassen und anschliessend die Vibrationseinrichtung 6 an den Behälter 1 heranzufahren. Bei dem Heranfahren wird auch das Vorspannen durch die Feder 7 erfolgen. Die Fahrbewegung der Vibrationseinrichtung 6 kann durch eine Steuerkurve gesteuert werden, insbesondere im Umlaufbereich eines Einlaufsternrads und Auslaufsternrads, wo die Behälter 1 in das Karussell eingeführt und nach einem Umlauf wieder herausgeführt werden.

Auch ist es möglich, die Vibrationseinrichtung 6 beweglich auszugestalten, so dass der Behälter 1 gegen die Vibrationseinrichtung 6 gedrückt wird und diesen entgegen der Kraft der Feder 7 verschiebt, wenn der Behälter 1 in die Position gebracht wird, in der er mit der Haltevorrichtung 5 gehalten werden kann. Es wird also beim Einsetzen des Behälters 1 in das Karussell die Vibrationseinrichtung 6 radial einwärts verschoben und die Feder 7 dadurch vorgespannt.

Wenn sich die Vibrationseinrichtung 6 mit dem Behälter 1 in Kontakt befindet, kann durch eine Vibration, die durch den Stößel der Vibrationseinrichtung 6 auf die Behälterseitenwand übertragen wird, der Behälter 1 mechanisch angeregt werden. Dadurch können Fremdkörper 2, wie etwa Glassplitter, in Bewegung versetzt werden.

Ein Sensor 3, der dazu eingerichtet ist, akustische Signale der durch die mechanische Anregung in Bewegung versetzten Fremdkörper 2 aufzunehmen, kann mittels einer Anlegevorrichtung 4 ebenfalls mit dem Behälter 1 in Kontakt gebracht werden. Die Anlegevorrichtung 4 kann als Greifer ausgebildet sein, der den Behälter 1 umschließt und dabei den Sensor 3 an den Behälter presst. Die Anlegevorrichtung 4 kann aber auch als einzelner Arm ausgebildet sein, der den Sensor 3 seitlich an dem Behälter 1 anlegt. Die Anlegevorrichtung 4 kann auch eine elastisches Element (nicht dargestellt) umfassen, dass den Sensor 3 mit dem Behälter 1 verspannt. Die Anlegevorrichtung 4 kann auch dazu eingerichtet sein, den Sensor 3 ähnlich wie die Vibrationseinrichtung 6 in radialer Richtung zu bewegen und gegen den Behälter 1 zu pressen.

Der Sensor 3 kann an jeder geeigneten Stelle mit dem Behälter 1 in Kontakt gebracht werden, insbesondere mit der Seitenwand oder dem Boden des Behälters. Es ist aber auch möglich den Sensor im Halsbereich oder am Verschluss des Behälters anzulegen. In einer besonders bevorzugten Ausgestaltungsvariante ist der Sensor 3 in den Klammern 5 der Haltevorrichtung integriert. Das Anlegen des Sensor kann so durch die ohnehin vorhandene Mechanik für die Steuerung der Klammern erfolgen. Eine gesonderte Anlegevorrichtung erübrigt sich.

Das von dem Sensor erfasst akustische Signal kann in einer Auswertungseinheit analysiert werden, um die für die Gegenwart von Fremdkörpern charakteristischen Signalanteile zu detektieren. Die Analyse kann im Zeit- und/oder im Frequenzraum erfolgen und beispielsweise durch einen digitalen Signalprozessor durchgeführt werden. Beispielsweise kann ein für eine hüpfende Bewegung der Fremdkörper charakteristisches wiederholtes Auftreten bestimmter Frequenzanteile detektiert werden. Auf Basis des Ergebnisses der Analyse kann über die Gegenwart oder Abwesenheit von Fremdkörpern entschieden werden und der entsprechende Behälter ggf. ausgesondert werden.

Die mechanische Anregung des Behälters 1 durch die Vibrationseinrichtung 6 und die Erfassung der Signale durch den Sensor 3 muss nicht unbedingt gleichzeitig erfolgen. So kann es von Vorteil sein, akustische Signale erst nach Abschluss der Vibrationsanregung zu erfassen, um Störsignale durch die Anregung selbst von vorneherein auszuschließen. Eine gleichzeitige Durchführung der Vibrationsanregung und der Signalerfassung ist aber bei geeigneter Filterung der Signale ebenfalls möglich.

Von Vorteil ist es unter Umständen auch, den Sensor 3 erst nach Abschluss der mechanischen Anregung an den Behälter anzulegen, um so eine übermäßige mechanische Belastung des Sensors zu vermeiden. Je nach Art der mechanischen Anregung ist es ausreichend, den Sensor unmittelbar nach Abschluss der mechanischen Anregung oder innerhalb einiger Sekunden nach Abschluss der Anregung an den Behälter anzulegen, um ein "Nachklappern" der Fremdkörper detektieren zu können.

Durch die Trennung von Anregung und Signaldetektion muss die Signaldetektion nicht an der gleichen Stelle oder im gleichen Anlagenteil erfolgen wie die Anregung. Insbesondere kann die Detektionsvorrichtung in Transportrichtung hinter der Anregungsvorrichtung angeordnet sein. In einer bevorzugten Ausgestaltungsvariante ist der Überschub zwischen einem Bearbeitungskarussell (z.B. einem Etikettierkarussell) und einem nachfolgenden Transferstern als Vibrationselement ausgelegt, das für die mechanische Anregung der Behälter sorgt. Das Anlegen der Sensoren an die Behälter und die Signaldetektion erfolgt dann erst im Transferstern.

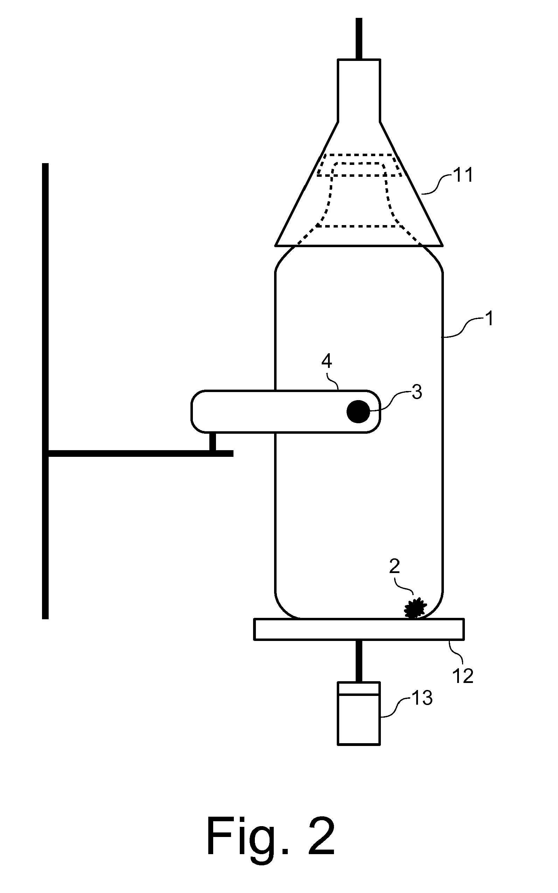

Die vorliegende Erfindung ist nicht auf die in Fig. 1 dargestellten Klammern als Halteelement beschränkt, sondern kann mit jeder geeigneten Halterung für die Behälter kombiniert werden, insbesondere mit den untenstehend in Zusammenhang mit Fig. 2 beschriebenen Zentrierelementen und Flaschentellern.

Die vorliegende Erfindung ist auch nicht auf eine bestimmte Art der mechanischen Anregung beschränkt. Anstelle der oben beschriebenen Vibrationsanregungen können auch Rotationsanregungen verwendet werden, bei denen der Behälter beispielsweise um eine vertikale Achse (bei rotationssymmetrischen Behältern wie z.B. Flaschen um die Achse der Rotationssymmetrie) in Drehung versetzt werden, so dass auch der flüssige Inhalt der Behälter zusammen mit den ggf. vorhandenen Fremdkörpern in Bewegung versetzt wird. Nach einem abrupten Stopp der Drehbewegung des Behälters rotiert der Inhalt weiter, wobei die Fremdkörper eine kreiselnde Bewegung ausführen und an der Behälterinnenwand entlang schrammen. Die dabei entstehenden akustischen Signale können durch einen Sensor erfasst und ausgewertet werden.

Figur 2 zeigt eine schematische Ansicht der Vorrichtung gemäß einer zweiten Ausführungsform der vorliegenden Erfindung. Die Ausführungsform der Fig. 2 unterscheidet sich von der in Fig. 1 dargestellten Ausführungsform durch die Art der Halterung des Behälters 1 und die Art der mechanischen Anregung. Ansonsten ähnelt diese Ausführungsform der Fig. 1, wobei gleiche Bezugszeichen gleiche oder ähnliche Elemente bezeichnen.

Der Behälter 1, wie beispielsweise eine Getränkeflasche aus Glas, Kunststoff oder dgl., wird durch ein konisches Zentrierelement ("Tulpe") 11 und einen Flaschentisch 12 gehalten. Die Halteelemente 11, 12 können Teil eines Bearbeitungskarussells sein, wie z.B. eines Etikettierkarussells. Die Halteelemente 11, 12 können aber auch Teil eines Ein- oder Auslaufsterns für ein derartiges Bearbeitungskarussell sein. Wie oben im Zusammenhang mit Fig. 1 erläutert, können die Behälter 1 durch die Halteelemente 11, 12 relativ zu dem Karussell bzw. dem Stern an einer vorbestimmten Position gehalten und durch das Karussell bzw. den Stern auf einer vorbestimmten horizontalen Kreisbahn kontinuierlich umlaufend bewegt werden.

Das Zentrierelement 11 und/oder der Flaschentisch 12 sind dazu eingerichtet, den Behälter um eine vertikale Achse (z.B. die Symmetrieachse des Behälters) in Rotation zu versetzen. Dazu können das Zentrierelement 11 und/oder der Flaschentisch 12 drehbar gelagert sein und mit einem Motor 13 gekoppelt sein. Um für eine mechanische Anregung der ggf. vorhandenen Fremdkörper in dem Behälter zu sorgen, wird der Antrieb 13 des Zentrierelements 11 bzw. des Flaschentischs 12 so gesteuert, dass der Behälter solange rotiert wird, bis der Inhalt des Behälters ebenfalls in Rotation versetzt ist, bevor die Rotation des Behälters wieder gestoppt wird.

Nach Abschluss der Anregung. d.h. nachdem die Rotation des Behälters gestoppt wurde, wird ein Sensor 3 an den Behälter angelegt, um Signale der ggf. vorhandenen Fremdkörper aufzunehmen. Wie obenstehend im Zusammenhang mit Fig. 1 erläutert wurde, kann die Anlegevorrichtung 4, mit der der Sensor an den Behälter angelegt wird, als Greifer ausgebildet sein, der den Behälter 1 umschließt und dabei den Sensor 3 an den Behälter presst. Die Anlegevorrichtung 4 kann aber auch als einzelner Arm ausgebildet sein, der den Sensor 3 seitlich an dem Behälter 1 anlegt. Die Anlegevorrichtung 4 kann auch eine elastisches Element (nicht dargestellt) umfassen, dass den Sensor 3 mit dem Behälter 1 verspannt. Die Anlegevorrichtung 4 kann auch dazu eingerichtet sein, den Sensor 3 ähnlich wie die Vibrationseinrichtung 6 in Fig. 1 in radialer Richtung zu bewegen und gegen den Behälter 1 zu pressen. Der Sensor 3 kann an jeder geeigneten Stelle mit dem Behälter 1 in Kontakt gebracht werden, insbesondere mit der Seitenwand des Behälters.

Aufgrund der Trennung von Anregung und Signaldetektion muss die Signaldetektion nicht im gleichen Anlagenteil erfolgen wie die Anregung. So können beispielsweise nach erfolgter Etikettierung die Behälter gegen Ende des Transports im Etikettierkarussell in Rotation versetzt werden, wobei die Detektion erst nach der Übergabe in einen Transferstern erfolgt. Es versteht sich, dass die Behälter im Transferstern durch eine andere Art von Halteelemente gehalten werden können als im Etikettierkarussell. Insbesondere können im Transferstern die in Fig. 1 gezeigten und obenstehend erläuterten Klammern 5 eingesetzt werden. Im Transferstern kann der Sensor 3 an jeder geeigneten Stelle mit dem Behälter 1 in Kontakt gebracht werden. Im Falle eines Klammersterns insbesondere auch mit dem Boden des Behälters, dem Halsbereich oder dem Verschluss des Behälters. In einer besonders bevorzugten Ausgestaltungsvariante ist der Sensor 3 in den Klammern 5 der Haltevorrichtung integriert. Das Anlegen des Sensor kann so durch die ohnehin vorhandene Mechanik für die Steuerung der Klammern erfolgen. Eine gesonderte Anlegevorrichtung erübrigt sich.

Die hier beschriebenen Ausführungsformen können in jeder geeigneten Weise kombiniert werden. Insbesondere kann die in Fig. 1 dargestellte Vibrationsanregungsvorrichtung auch in Verbindung mit der in Fig. 2 gezeigten Halterung durch Zentrierelemente und Flaschenteller zum Einsatz kommen.

Dadurch, dass die Sensoren erst nach Abschluss der Anregung (bei gestoppter Rotation) an die Flaschen angelegt werden, müssen die Sensoren nicht mit dem Behälter mitgedreht werden, wodurch sich allfällige Probleme mit der Signalübertragung zwischen rotierenden Sensoren und der stationären Auswertungseinheit vermeiden lassen. Zudem sind die Sensoren selbst nicht der mechanischen Anregung durch Rotation oder Vibration ausgesetzt, wodurch die Haltbarkeit und Lebensdauer verbessert wird. Bei Verwendung einer Vibrationsanregung können selbst bestehende Etikettierkarussells mit einer Fremdkörperdetektion nachgerüstet werden, die keine Servo-Flaschentische haben.

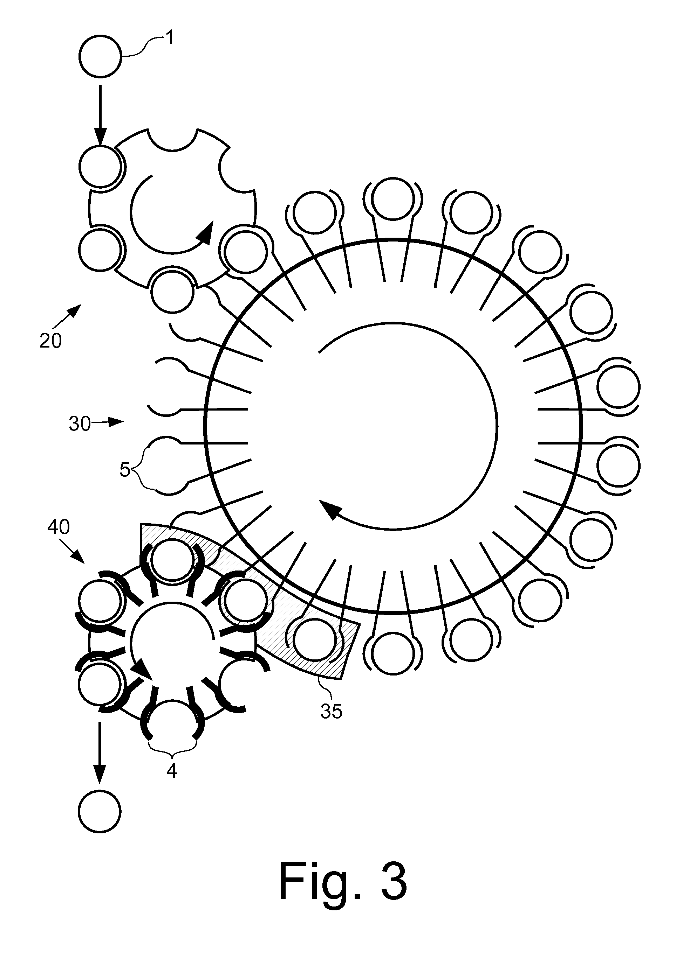

Fig. 3 zeigt schematisch eine Draufsicht auf eine Transportvorrichtung mit einer erfindungsgemäßen Inspektionsvorrichtung. Die Behälter 1 werden in der Zeichnung von oben kommend mittels eines Einlaufsterns 20 in ein Bearbeitungskarussell 30 eingeführt, von wo aus sie mittels eines Auslaufsterns 40 einer weiteren Bearbeitung zugeführt werden können. Bei dem Bearbeitungskarussell 30 kann es sich z.B. um eine Etikettierungsvorrichtung handeln. Die Anregung kann beispielsweise mit Hilfe eines Schubblechs 35 im Überschubbereich zwischen dem Bearbeitungskarussell 30 und dem Auslaufstern 40 erfolgen. Die Sensoren (nicht dargestellt) und die zugehörigen Anlegevorrichtungen 4 sind im Auslaufstern 40 angeordnet. Die Pfeile verdeutlichen die Rotationsrichtung der jeweiligen Komponenten.

In einer bevorzugten Ausführungsform sind die Anregungsvorrichtung und die Anlegevorrichtung für den Sensor räumlich getrennt. Wie obenstehend erläutert wurde, kann die Anregung beispielsweise im Bearbeitungskarussell 30 oder im Überschub zwischen dem Bearbeitungskarussell 30 und dem Auslaufstern 40 erfolgen, wobei die Signalerfassung dann im Auslaufstern 40 erfolgt. Die Anregung kann auf jede geeignete Weise erfolgen. Beispielsweise können Schubbleche 35 für die Behälter so ausgestaltet (z.B. geriffelt) werden, dass die Anregung alleine durch die Bewegung der Behälter relativ zu den Schubblechen erfolgt. Alternativ können Vibrationselemente vorgesehen werden, die für eine aktive Anregung der Behälter sorgen. Beispielsweise können Schubbleche 35, auf denen die Behälter stehend transportiert werden, in eine vertikale Vibration versetzt werden, die so auf die Behälter übertragen wird.

Die in Fig. 3 dargestellte Transportvorrichtung kann jede geeignete Halterungsvorrichtung für die Behälter verwenden und mit jeder der oben erläuterten Ausführungsformen kombiniert werden. Insbesondere können anstelle der Klammern 5 auch die in Fig. 2 angedeuteten Zentrierelemente (Zentrierglocken) und Flaschentische (Drehteller) eingesetzt werden, wobei die Behälter durch die Zentrierglocken gegen die Drehteller vorgespannt sein können. Sowohl die in Zusammenhang mit Fig. 1 als auch mit Fig. 2 beschriebene Ausgestaltung der Anregungsvorrichtung (Vibrations- bzw. Rotationsvorrichtung) kann anstelle des Schubblechs 35 verwendet werden und sowohl im Bearbeitungskarussell als auch im Auslaufstern angeordnet sein.

## Patentansprüche

1. Vorrichtung zur Inspektion gefüllter Behälter (1) auf Fremdkörper (2) während der zu inspizierende Behälter (1) mittels eines Halteelementes (5; 11, 12) in einer Transportvorrichtung (20, 30) fixiert ist und entlang einer vorgegebenen Trajektorie transportiert wird, umfassend
eine Anregungsvorrichtung (6; 13; 35), die dazu eingerichtet ist, den Behälter (1) mechanisch anzuregen, so dass etwaige Fremdkörper (2) in Bewegung versetzt werden,
einen Sensor (3), und
eine Anlegevorrichtung (4), die dazu eingerichtet ist, den Sensor (3) an den Behälter (1) anzulegen,
wobei der Sensor (3) dazu eingerichtet ist, im angelegten Zustand akustische Signale der durch die mechanische Anregung in Bewegung versetzten Fremdkörper (2) aufzunehmen,
**dadurch gekennzeichnet, dass**
die Anlegevorrichtung (4) des Weiteren dazu eingerichtet ist, den Sensor (3) erst nach Abschluss der mechanischen Anregung an den Behälter (1) anzulegen.

2. Vorrichtung nach Anspruch 1, wobei die Anlegevorrichtung (4) in Transportrichtung hinter der Anregungsvorrichtung (6; 13; 35) angeordnet ist.

3. Vorrichtung nach Anspruch 1 oder 2, wobei die Transportvorrichtung (20, 30) ein Bearbeitungskarussell (30) und einen nachfolgenden Transferstern umfasst, wobei die Anregungsvorrichtung (6; 13; 35) im Bearbeitungskarussell oder in einem Überschub zwischen dem Bearbeitungskarussell und dem Transferstern angeordnet ist und die Anlegevorrichtung (4) im Transferstern angeordnet ist.

4. Vorrichtung zur Inspektion gefüllter Behälter (1) auf Fremdkörper (2) während der zu inspizierende Behälter (1) mittels eines Halteelementes (5; 11, 12) in einer Transportvorrichtung fixiert ist und entlang einer vorgegebenen Trajektorie transportiert wird, umfassend
eine Anregungsvorrichtung (6; 35), die dazu eingerichtet ist, den Behälter (1) mechanisch anzuregen, so dass etwaige Fremdkörper (2) in Bewegung versetzt werden,
einen Sensor (3), und
eine Anlegevorrichtung (4), die dazu eingerichtet ist, den Sensor (3) an den Behälter (1) anzulegen,
wobei der Sensor (3) dazu eingerichtet ist, im angelegten Zustand akustische Signale der durch die mechanische Anregung in Bewegung versetzten Fremdkörper (2) aufzunehmen,
**dadurch gekennzeichnet, dass**
die Anregungsvorrichtung (6; 35) unabhängig von dem Halteelement (5; 11, 12) mit dem Behälter (1) in Kontakt bringbar ist.

5. Vorrichtung nach einem der Ansprüche 1 bis 4, wobei die Anregungsvorrichtung (6; 13; 35) dazu eingerichtet ist, den Behälter (1) in Rotation und/oder in Vibration zu versetzen.

6. Vorrichtung nach einem der Ansprüche 1 bis 5, wobei die Anregungsvorrichtung (6; 13; 35) eine Vibrationseinrichtung umfasst, die über ein elastisches Element, vorzugsweise eine Feder, gegen den Behälter (1) verspannt werden kann.

7. Vorrichtung nach einem der Ansprüche 1 bis 6, wobei die Anregungsvorrichtung (6; 13) einen Motor umfasst, der den Behälter (1), vorzugsweise um seine Längsachse, in Rotation versetzen kann.

8. Vorrichtung nach einem der Ansprüche 1 bis 7, wobei die Anlegevorrichtung (4) dazu eingerichtet ist, den Sensor (3) mit einer Außenwand, vorzugsweise einer Seitenwand, des Behälters (1) in Kontakt zu bringen.

9. Vorrichtung nach einem der Ansprüche 1 bis 8, wobei der Sensor (3) vorzugsweise ein piezoelektrisches Element umfasst und dazu eingerichtet ist, akustische Signale von an eine Innenwand des Behälters (1) stoßenden Fremdkörpern (2) aufzunehmen.

10. Vorrichtung nach einem der Ansprüche 1 bis 9, wobei der Sensor (3) im angelegten Zustand längs oder zumindest parallel zu der vorgegebenen Trajektorie bewegt wird.

11. Vorrichtung nach einem der Ansprüche 1 bis 10, wobei die Transportvorrichtung einen Klammerstern umfasst und der Sensor (3) in einer Klammer des Klammersterns integriert ist.

12. Vorrichtung nach einem der Ansprüche 1 bis 11, wobei die Anlegevorrichtung (4) eine Steuerkurve, Hubkurve, einen Motor, einen Linearmotor, oder einen Servomotor zur Steuerung der Bewegung des Sensors (3) umfasst.

13. Vorrichtung nach einem der Ansprüche 1 bis 12, des Weiteren umfassend eine Auswertungseinheit, die dazu eingerichtet ist, das von dem Sensor (3) aufgenommene akustische Signal im Zeit- und/oder im Frequenzraum zu analysieren und auf Basis der Analyse über die Gegenwart oder die Abwesenheit eines Fremdkörpers (2) in dem Behälter (1) zu entscheiden.

14. Verfahren zur Inspektion gefüllter Behälter (1) auf Fremdkörper (2) während der zu inspizierende Behälter (1) mittels eines Halteelementes (5; 11, 12) in einer Transportvorrichtung fixiert ist und entlang einer vorgegebenen Trajektorie transportiert wird, umfassend die Schritte:
mechanisches Anregen eines Behälters (1), so dass etwaige Fremdkörper (2) in Bewegung versetzt werden,
Anlegen eines Sensors (3) an den Behälter (1), und
Aufnehmen von akustischen Signalen der durch die mechanische Anregung in Bewegung versetzten Fremdkörper (2) mittels des angelegten Sensors (3),
**dadurch gekennzeichnet, dass**
der Sensor (3) erst nach Abschluss der mechanischen Anregung an den Behälter (1) angelegt wird.

15. Verfahren zur Inspektion gefüllter Behälter (1) auf Fremdkörper (2) während der zu inspizierende Behälter (1) mittels eines Halteelementes (5; 11, 12) in einer Transportvorrichtung fixiert ist und entlang einer vorgegebenen Trajektorie transportiert wird, umfassend die Schritte:
mechanisches Anregen eines Behälters (1) mittels einer Anregungsvorrichtung (6; 35), so dass etwaige Fremdkörper (2) in Bewegung versetzt werden,
Anlegen eines Sensors (3) an den Behälter (1), und
Aufnehmen von akustischen Signalen der durch die mechanische Anregung in Bewegung versetzten Fremdkörper (2) mittels des angelegten Sensors (3),
**dadurch gekennzeichnet, dass**
die Anregungsvorrichtung (6; 35) unabhängig von dem Halteelement (5; 11, 12) mit dem Behälter (1) in Kontakt gebracht wird.
